# EUROPÄISCHE PATENTANMELDUNG

(11) **EP 4 613 080 A1**
(43) Veröffentlichungstag der Anmeldung: **10.09.2025**
(21) Anmeldenummer: 25161605.8
(22) Anmeldetag: 04.03.2025
(51) Int. Cl.: A01B 59/043, B60S 9/00

(54) **ANHÄNGER**

(30) Priorität: 05.03.2024 DE 102024106291
(71) Anmelder: Lemken GmbH & Co KG, 46519 Alpen (DE)
(72) Erfinder: Paulessen, Georg, 47877 Willich (DE); Krampe, Johannes, 49504 Lotte (DE); Hünnekes, Arndt, 47546 Kalkar (DE); Lewa, Rolf, 47475 Kamp-Lintfort (DE); Passmann, Niklas, 47495 Rheinberg (DE)

(57) **Zusammenfassung**

Es wird ein Anhänger (3) mit einer Zugeinrichtung (4) vorgeschlagen, welcher eine daran mittels einer Lagerung (6) beweglich gelagerte Koppeleinrichtung (5) aufweist, wobei die Koppeleinrichtung (5) Gelenkpunkte (11, 12) zur lösbaren Verbindung mit einer Aufnahmevorrichtung (10) eines Zugfahrzeuges (2) ausweist, wobei die Zugeinrichtung (4) eine bewegliche Abstellvorrichtung (7) aufweist, welche von einer Abstellposition in eine Fahrposition und umgekehrt eingestellt werden kann. Die Abstellvorrichtung (7) weist zumindest einen Anschlag (8) auf, welcher in der Abstellposition die Beweglichkeit der Koppeleinrichtung (5) und/ oder der Lagerung (6) in zumindest einem Freiheitsgrad limitierend ausgebildet ist.

## Beschreibung

Die Erfindung betrifft einen Anhänger gemäß dem Oberbegriff des Patentanspruches 1.

Aus der Offenlegung DE3149982A1 ist eine Sämaschine mit einer Längsfahreinrichtung bekannt, welche für den Straßentransport als Anhänger hinter einem landwirtschaftlichen Schlepper mitgeführt wird. An einem verlängerten Tragarm ist eine schwenkbare Zugvorrichtung zur Kopplung an den Schlepper sowie dahinter eine abnehmbare Abstellstütze angeordnet.

Das Gebrauchsmuster DE9409143U1 zeigt einen als Heuwerbemaschine ausgebildeten Anhänger mit schwenkbarem Fahrwerk, einer festen Deichsel und einem daran klappbar befestigen Stützfuß sowie einer schwenkbaren Kupplungsvorrichtung zur Verbindung mit einem Schlepper.

Analog ist ein als Direktsämaschine ausgeführter Anhänger aus dem Patent EP 3065529 B1 bekannt.

Die Kopplung der zuvor genannten Anhänger an einen Schlepper gestaltet sich schwierig, da die frei schwenkbaren Kopplungs- und Zugvorrichtungen der Anhänger sich beim Koppelvorgang an den Schlepper ungewollt verschwenken können und somit mehrfache Rangierfahrten des Schlepperfahrers erfordert und dies auch zu Unfällen führen kann.

Weiterhin zeigt die Anmeldeschrift EP 1052890 A1 einen als Säkombination ausgeführten Anhänger. Dieser weist eine Deichsel mit einer beweglich daran gelagerten Kuppeleinrichtung zum Anbau an den Dreipunktkraftheber eines Schleppers auf. Höhenverstellbare Abstellstützen sind direkt an der Kuppeleinrichtung angeordnet. Diese müssen nach dem Koppelvorgang beidseitig der Deichsel an der Kuppeleinrichtung arretiert werden. Durch die Enge zwischen Schlepper und Kuppeleinrichtung ist die Arretierung wenig komfortabel und birgt ebenfalls eine Unfallgefahr für den Bediener.

Aufgabe der Erfindung ist es, die Nachteile des Standes der Technik zu beseitigen und eine einfach, komfortabel und sicher handhabbare Anhänge- und Abstellvorrichtung für einen Anhänger bereit zu stellen.

Diese Aufgabe wird durch die Merkmale des kennzeichnenden Teiles des Anspruches 1 gelöst. Die folgenden Ansprüche geben weitere Vorteile an.

Ein Anhänger, welcher insbesondere als landwirtschaftliches Gerät oder Fahrzeug ausgebildet ist, weist eine Zugeinrichtung und eine mittels einer Lagerung beweglich daran gelagerte Koppeleinrichtung auf. Diese weist wiederum Koppel- oder Gelenkpunkte zur lösbaren Verbindung mit einer Aufnahmevorrichtung eines Zugfahrzeuges auf. Weiterhin weist die Zugeinrichtung eine bewegliche Abstellvorrichtung auf, welche von einer Abstellposition in eine Fahrposition und umgekehrt eingestellt werden kann. Die Abstellvorrichtung weist zumindest einen Anschlag auf, welcher in der Abstellposition die Beweglichkeit der Koppeleinrichtung und/ oder der Lagerung in zumindest einem Freiheitsgrad limitierend ausgebildet ist.

Die Beweglichkeit der Koppeleinrichtung, welche für das Nachlaufen des Anhängers hinter dem Zugfahrzeug im Fahrbetrieb erforderlich ist, ist somit lediglich in der Fahrposition der Abstellvorrichtung gegeben. In der Abstellposition des Anhängers, bei welcher sich die Zugeinrichtung mittels der Abstellvorrichtung auf dem Boden abstützt, begrenzt diese zugleich die Beweglichkeit der Koppeleinrichtung und vereinfacht den Koppelvorgang zwischen Anhänger und Zugfahrzeug.

In einer kostengünstigen Ausführungsform der Erfindung sind die Abstellvorrichtung und der Anschlag um eine gemeinsame Achse schwenkbar mit der Zugeinrichtung verbunden. Durch diese Bauform kann die Abstellvorrichtung aus ihrer Abstellposition mit Bodenkontakt nach dem Koppelvorgang von Zugmaschine und Anhänger in eine vom Boden entfernte Stellung verschwenkt werden, welche die Bodenfreiheit erhöht. Mit der gleichen Schwenkbewegung wird der Anschlag zugleich aus einer Kontaktstellung mit der Koppeleinrichtung in eine entfernte Stellung zur Koppeleinrichtung verschwenkt und ermöglicht die freie Beweglichkeit zwischen Koppeleinrichtung und Zugeinrichtung, welche für den Fahrbetrieb des Anhängers erforderlich ist.

In einer alternativen Ausführung der Erfindung sind die Abstellvorrichtung und der Anschlag entfernt voneinander und um jeweils verschiedene Achsen schwenkbar mit der Zugeinrichtung verbunden. Durch diese aufgelöste Bauweise kann die Abstellvorrichtung auch entfernt von der Koppeleinrichtung angeordnet werden, während der Anschlag in unmittelbarer Nähe zur Koppeleinrichtung diese in einer Kontaktstellung in ihrer Bewegung zur Zugeinrichtung begrenzt oder in einer entfernten Stellung zur Koppeleinrichtung frei gibt. Durch eine bewegliche Wirkverbindung zwischen Abstellvorrichtung und Anschlag wird dieser durch die Auf- und Abwärtsbewegung der Abstellvorrichtung fernbetätigt. Dies kann beispielsweise durch eine bewegliche Verbindungslasche oder ähnlich wirkende Mechanismen erfolgen.

In einer verbesserten Erfindungsform ist die Lagerung der Koppeleinrichtung an der Zugeinrichtung lediglich rotatorisch um eine Achse gelagert. Dies ermöglicht eine freie Kurvenfahrt und Lenkbewegung zwischen Anhänger und Zugfahrzeug, während ungewollte Kippbewegungen zwischen Anhänger und Zugfahrzeug vermieden werden. Weiter bevorzugt erfolgt die Lagerung der Koppeleinrichtung an der Zugeinrichtung um eine weitere, zweite Achse. Hierdurch wird eine kardanische Gelenkigkeit der Lagerung zwischen Koppeleinrichtung und Zugeinrichtung hergestellt und verbessert die Beweglichkeit zwischen Anhänger und Zugfahrzeug. Gleichzeitig werden gefährliche und statisch unbestimmte Zustände, welche bei enger Kurvenfahrt zwischen Anhänger und Zugfahrzeug auftreten können, vermieden. Optional und weiter bevorzugt erfolgt die Lagerung der Koppeleinrichtung an der Zugeinrichtung um drei rotatorische Freiheitsgrade. Hierdurch ist ein maximaler Bewegungsausgleich zwischen Anhänger und Zugfahrzeug gegeben. Dies erfordert jedoch eine statisch bestimmte Verbindung zwischen der Aufnahmevorrichtung des Zugfahrzeuges und der Koppeleinrichtung in zwei rotatorischen Freiheitsgraden.

In einer fehlersicheren Ausführungsform der Erfindung ist der Anschlag, welcher mit der Abstellvorrichtung verbunden ist, plastisch oder elastisch verformbar oder beweglich ausgebildet. Hat der Fahrer oder Bediener des Zugfahrzeuges beispielsweise vergessen, die Abstellvorrichtung in Fahrposition zu verbringen und/oder dort zu arretieren, wird eine Zerstörung des Anschlages und/oder der Koppeleinrichtung vermieden und eventuelle Unfälle im Fahrbetrieb des Anhängers vermieden.

In einer verbesserten Ausführungsform der Erfindung weist die Abstellvorrichtung einen Aktor und/oder einen Energiespeicher auf, welcher die Bewegung der Abstellvorrichtung relativ zur Zugeinrichtung ausführt und/oder unterstützt. Durch einen Energiespeicher kann der Kraftaufwand beim Einstellen der Abstellvorrichtung von der Fahrposition in die Abstellposition und umgekehrt verringert werden. Weiterhin kann durch eine entsprechende Anordnung des Energiespeichers eine Übertotpunkt-Federung hergestellt werden, welche die Abstellvorrichtung selbsttätig in der Fahr- oder Abstellposition hält. Bevorzugt ist der Energiespeicher als Zug- oder Druck- oder Torsionsfeder ausgeführt. Durch einen Aktor kann die Stellbewegung der Abstellvorrichtung mittels Fremdenergie erfolgen. So können hohe Stützkräfte des Anhängers, welche auf der Abstellvorrichtung lasten, bequem durch den Bediener überwunden werden. Bevorzugt ist der Aktor als Hydraulik- oder Pneumatikzylinder ausgeführt und mit einer Druckquelle des Zugfahrzeuges oder einer manuell betätigten Pumpe verbunden.

In einer weiter bevorzugten Erfindungsform ist der Koppeleinrichtung die Aufnahmevorrichtung eines Zugfahrzeuges als eine höhenbewegliche Hubeinrichtung zugeordnet. Durch die Hubeinrichtung des Zugfahrzeuges, welche auf die Koppeleinrichtung wirkt, kann die Zugeinrichtung des Anhängers und die damit verbundene Abstellvorrichtung in Abstellposition vom Boden abgehoben werden und leicht in die Fahrposition verstellt werden.

Insbesondere weist die Koppeleinrichtung dazu eine Querverbindung auf, welche mit einem ersten und einem zweiten Gelenkpunkt mit der Aufnahmevorrichtung des Zugfahrzeuges verbunden ist. Somit wird zwischen Koppeleinrichtung und den Gelenkpunkten der Aufnahmevorrichtung eine Nickbewegung zwischen Zugeinrichtung und Zugfahrzeug ermöglicht, während die weiteren erforderlichen Freiheitsgrade zur Bewegung von Anhänger und Zugfahrzeug zueinander in der Lagerung zwischen Koppeleinrichtung und Zugeinrichtung realisiert sind. Bevorzugt ist die Aufnahmevorrichtung des Zugfahrzeuges als Dreipunkthubvorrichtung ausgebildet, wobei der erste und zweite Gelenkpunkt der Querverbindung der Koppeleinrichtung jeweils einem Unterlenker der Dreipunkthubvorrichtung des Zugfahrzeuges zugeordnet sind.

In einer weiteren Erfindungsform weist die Koppeleinrichtung einen weiteren Gelenkpunkt auf, welcher über eine bewegliche Strebe mit dem Zugfahrzeug verbunden ist. Bevorzugt ist die bewegliche Strebe als Oberlenker einer Dreipunkthubvorrichtung ausgeführt, alternativ als Zugseil, Zugkette oder als längenverstellbarer Aktor.

In einer weiteren speziellen Erfindungsform ist an der Koppeleinrichtung ein Energiespeicher angeordnet ist. Dieser ist einerseits mit der Zugeinrichtung oder dem Zugfahrzeug und andererseits mit der Koppeleinrichtung verbunden. Mit diesem Energiespeicher kann ein Teil des Gewichtes des Anhängers oder der auf die Koppeleinrichtung wirkenden Stütz- oder Zugkräfte auf das Zugfahrzeug verlagert werden. Insbesondere kann die Hinterachse des Zugfahrzeuges hierdurch variabel belastet und in ihrem Abtriebs- und Schlupfverhalten beeinflusst werden. Beim An- und Abkoppelvorgang des Anhängers vom Zugfahrzeug kann der Energiespeicher entlastet werden und die Koppeleinrichtung auf dem Anschlag der Abstellvorrichtung, welche dann in Abstellposition steht, sicher abgelegt und in ihrer Beweglichkeit zur Zugeinrichtung limitiert werden.

Die Erfindung zeichnet sich insbesondere dadurch aus, dass durch Anordnung eines zusätzlichen Anschlages an einer einstellbaren Abstellvorrichtung eine sichere Arretierung oder Limitierung der Beweglichkeit einer Koppeleinrichtung relativ zur Zugeinrichtung erreicht wird. Hierdurch werden der Koppelvorgang zwischen Anhänger und Zugfahrzeug auf einfache und kostengünstige Weise verbessert und Unfälle dabei vermieden.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig. 1 eine Fahrzeugkombination in Seitenansicht,
Fig. 2 eine Fahrzeugkombination in Isometrie,
Fig. 3 eine Detailansicht aus Figur 2,
Fig. 4 eine Detailansicht aus Figur 2 in Fahrposition der Abstellvorrichtung und
Fig. 5 die Detailansicht aus Figur 4 in Abstellposition der Abstellvorrichtung

Bei den Darstellungen handelt es sich im Wesentlichen um konkrete Ausführungsbeispiele. Die Erfindung ist hingegen nicht auf die dargestellten Ausführungsbeispiele beschränkt, sondern kann auch in fachmännischer Weise abgewandelt werden, um sie an einen bestimmten Anwendungsfall anzupassen.

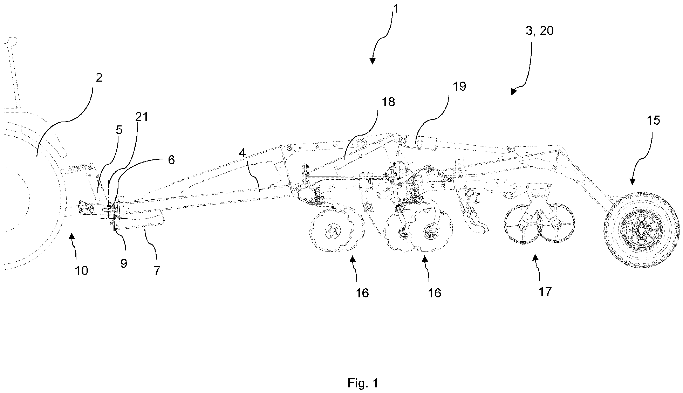

In Figur 1 ist eine Fahrzeugkombination 1 aus einer Zugmaschine 2 mit einem Anhänger 3 dargestellt. Die Zugmaschine ist als landwirtschaftlicher Traktor mit einer Aufnahmevorrichtung 10 gezeigt. Die Aufnahmevorrichtung 10 ist als heckseitiges Dreipunkthubwerk gemäß Vorgaben der ISO 730 ausgebildet. Der Anhänger 3 ist als landwirtschaftliches Arbeitsgerät mit einem Rahmen 18, einem Fahrwerk 15 mit daran angeordneten Laufrädern sowie einer vorn am Rahmen 18 angeordneten Zugeinrichtung 4 ausgebildet. Vorliegend ist das landwirtschaftliche Arbeitsgerät als Bodenbearbeitungsgerät mit scheibenförmigen Werkzeugen 16 zum Schneiden, Lockern und Mischen von Boden- oder Pflanzenmaterial ausgeführt. Hinter den Werkzeugen 16 ist eine beispielsweise als Walze ausgeführte Tiefenführung 17 angeordnet, welche die Werkzeuge 16 variabel in der Arbeitstiefe über eine Bodenoberfläche führt und zugleich den durch die Werkzeuge 16 gelockerten Boden rückverfestigen kann. Das Fahrwerk ist mittels eines Aktors 19 höhenverstellbar mit dem Rahmen 18 verbunden, um das landwirtschaftliche Arbeitsgerät mit seinen Werkzeugen 16 und der Tiefenführung 17 bei Wende- oder Transportfahrt über die Bodenoberfläche auszuheben. Der Aktor 19 ist als Hydraulikzylinder ausgeführt und wird von der Zugmaschine 2 mittels eines Drucksteuerventiles betätigt. Im vorderen Bereich des als landwirtschaftliches Arbeitsgerät ausgeführten Anhängers 3 ist dieser mit der Zugeinrichtung 4 und der daran mittels der Lagerung 6 beweglich gelagerten Koppeleinrichtung 5 zumindest um die Achse 21 lenkbar und weiterhin aushebbar mit der Aufnahmevorrichtung 10 des Zugfahrzeuges 2 verbunden. Alternativ oder zusätzlich kann der Aushub oder eine zusätzliche Lenkung des landwirtschaftlichen Arbeitsgerätes mittels eines weiteren, nicht dargestellten Aktors erfolgen, welcher zwischen dem Rahmen 18 und der dann beweglich am Rahmen 18 gelagerten Zugeinrichtung 4 angeordnet ist.

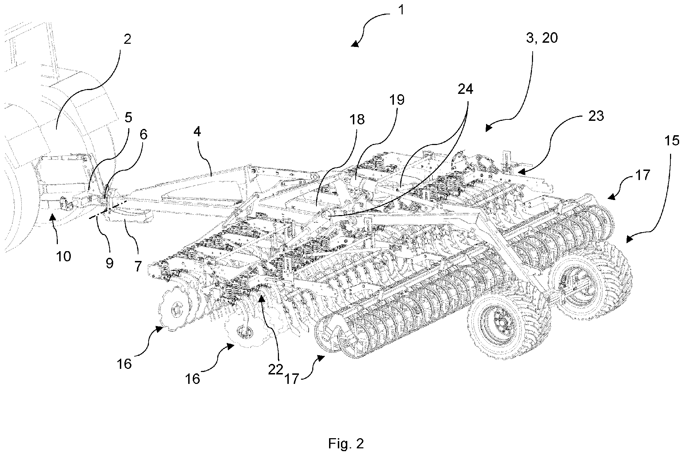

Figur 2 zeigt die Fahrzeugkombination 1 aus Figur 1 in einer perspektivischen Darstellung. Der Rahmen 18 ist mehrteilig aus zumindest einem rechten und einem linken Seitenteil 22, 23 ausgebildet, an welchen die Werkzeuge 16 bevorzugt in mehreren Reihen hinter- und nebeneinander angeordnet sind. Ebenfalls sind die Tiefenführungen 17 ebenfalls höhenverstellbar an den Seitenteilen angeordnet. Die Seitenteile 22, 23 können gemeinsam mit den Werkzeugen 16 und den Tiefenführungen 17 von der dargestellten Arbeitsposition mittels weiterer Aktoren 24 in eine aufrechte, weniger breite Transportposition zur Straßenfahrt hydraulisch verschwenkt werden.

Im vorderen Bereich der Zugeinrichtung 4, welche mittels der Koppeleinrichtung 5 an der Aufnahmevorrichtung 10 der Zugmaschine gekoppelt ist, ist im unteren Bereich eine Abstellvorrichtung 7 um die Achse 9 schwenkbar mit der Zugeinrichtung 4 verbunden.

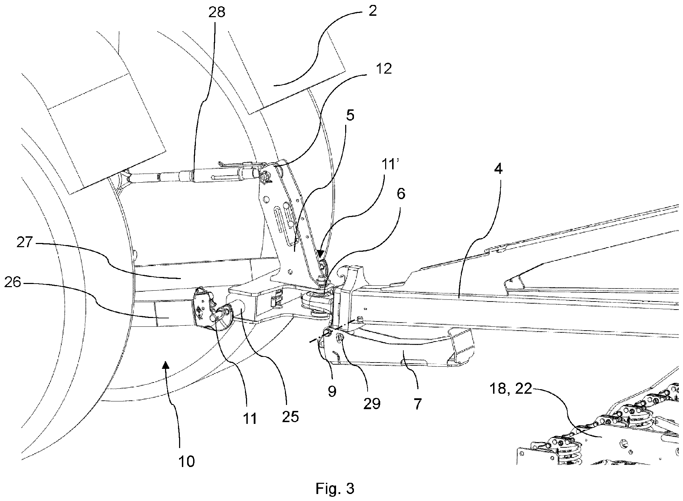

Im Detail wird dies in Figur 3 dargestellt.

Die seitens der Zugmaschine 2 angeordnete Aufnahmevorrichtung 10 ist als Dreipunkthubvorrichtung ausgebildet. Ein rechter Unterlenker 27 und ein linker Unterlenker 26 sind zueinander beabstandet und mit der Zugmaschine beweglich verbunden und können mit einem nicht dargestellten Aktormechanismus in der Höhe relativ zum Boden auch unter Last ausgehoben werden. Endseitig weisen die Unterlenker 26, 27 Fanghaken auf, welche an den endseitigen Gelenkpunkten 11 und 11' der Querverbindung 25 der Koppeleinrichtung 5 drehbar und lösbar gelagert sind. Bevorzugt sind die Gelenkpunkte 11 und 11' als Fangkugeln ausgebildet. Weiterhin weist die Koppeleinrichtung 5 an ihrem oberen Ende einen weiteren Gelenkpunkt 12 als lösbare Verbindung mit einer Strebe 28 auf, welche wiederum an ihrem gegenüberliegenden Ende ebenfalls gelenkig mit der Zugmaschine 2 verbunden ist. Bevorzugt ist diese Strebe 28 als längenveränderlicher Oberlenker eines Dreipunkthubwerkes ausgebildet, weiter bevorzugt als längenveränderlicher Hydraulikzylinder.

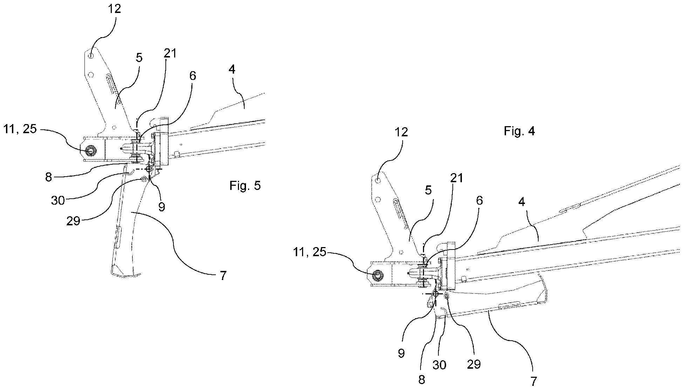

Figur 4 zeigt im Detail die Anordnung der Koppeleinrichtung 5 und der Abstellvorrichtung 7 an der Zugeinrichtung 4. Die Lagerung 6, welche die Koppeleinrichtung 5 mit der Zugeinrichtung 4 verbindet, ist vorliegend als Kugelgelenkauge ausgeführt und ermöglicht über die Lenkbewegung um die Achse 21 hinaus weitere Kipp- und Nickbewegungen der Koppeleinrichtung 5 gegenüber der Zugeinrichtung. Alternativ kann die Lagerung 6 auch aufgelöst in einzelnen Lagerungen aufgebaut sein, welche eine Schwenkung oder Rotation der Koppeleinrichtung 5 zumindest um eine hochstehende Achse 21, weiter bevorzugt um eine Längsachse sowie weiter bevorzugt um eine Querachse, somit um insgesamt drei rotatorische Freiheitsgrade ermöglicht. Die Gelenkpunkte 11 und 12 dienen zur Aufnahme der nicht dargestellten Ober- und Unterlenker der Zugmaschine 2. Die Gelenkpunkte 11 bzw. die Querverbindung 25 der Koppeleinrichtung 5 sowie optional der Gelenkpunkt 12 sind beabstandet zur Achse 21 bzw. zur Lagerung 6 angeordnet. Dies eröffnet einen größeren Freiraum und ermöglicht insbesondere bei enger Kurvenfahrt eine verbesserte Schwenkbarkeit der Koppeleinrichtung 5 zur Zugeinrichtung 4.

Unterhalb der Zugeinrichtung 4 ist die Abstellvorrichtung 7 als um die Achse 9 schwenkbare Stütze angeordnet. Diese ist in Fahrposition mit einer als Steckbolzen ausgeführten Sicherung 29 arretiert. Im Abstand zur Achse 9 weist die Abstellvorrichtung 7 einen als Kontaktfläche ausgebildeten Anschlag 8 auf. Dieser ist in der dargestellten Fahrposition der Abstellvorrichtung 7 aus dem Bewegungsraum der Koppeleinrichtung 5 herausgeschwenkt und ermöglicht aufgrund des großen Abstandes zur Koppeleinrichtung 5 deren freie Beweglichkeit innerhalb der Grenzen der Lagerung 6. Die Lagerung 6 ist als flanschbares Kugelgelenkauge ausgebildet und rückseitig gegen die Zugeinrichtung geflanscht und austauschbar befestigt. Weiterhin weist die Lagerung an seinem unteren Ende einen Vorsprung mit einem Durchbruch zur Aufnahme der Achse 9 auf, um welche die Abstellvorrichtung 7 schwenkbar gelagert ist. Alternativ kann der Vorsprung auch direkt der Zugeinrichtung 4 zugeordnet werden.

Figur 5 zeigt analog zu Figur 4 die Anordnung der Koppeleinrichtung 5 und der Abstellvorrichtung 7 an der Zugeinrichtung 4, jedoch in Abstellposition.

Hierzu ist die Abstellvorrichtung 7 von einer liegenden Fahrposition, wie in Figur 4 gezeigt, in eine aufrechte Abstellposition um die Achse 9 verschwenkt. Weiterhin ist die Abstellvorrichtung 7 mit der Sicherung 29 gegen Zurückschwenken gesichert. Der Anschlag 8 ist mit seiner Kontaktfläche um die Achse 9 unter die Koppeleinrichtung 5 vorgeschwenkt und bildet eine Auflage für die Koppeleinrichtung 5, um diese zumindest gegen Herabfallen zu hindern. Dies ermöglicht ein bequemes An- und Abkoppeln der Unter- und Oberlenker der Aufnahmevorrichtung des Zugfahrzeuges. Durch eine passende Formgebung des Anschlages 8 und korrespondierenden Kontaktflächen der Koppeleinrichtung 5 kann eine weitere Begrenzung der Beweglichkeit der Koppeleinrichtung 5 um eine Längsachse oder die aufrechte Achse 21 erfolgen. Unfälle durch Herabfallen oder unbeabsichtigtes Verschwenken der Koppeleinrichtung 5 werden somit wirksam vermieden. Vergisst der Fahrer des Zugfahrzeuges, nach dem Koppelvorgang die Abstellvorrichtung 7 in Fahrposition zu verschwenken und zu arretieren, kann mangels Freiraumes zur Koppeleinrichtung 5 der Anschlag und somit die Abstellvorrichtung 7 beim Aushub der Aufnahmevorrichtung 10 gewaltsam zerstört werden. Aus diesem Grund weist die Abstellvorrichtung 7 im Bereich der Kontaktfläche des Anschlages 8 einen oder mehrere Ausbrüche 30 auf. Somit kann sich der Anschlag 8 zur Vermeidung größerer Schäden verformen und eine Zerstörung der Abstellvorrichtung 7 verhindern. Nach Erkennung der Fehlbedienung kann diese Verformung im Bereich der Ausnehmung 30 mit einfachen Mitteln zurückgebogen werden. Alternativ kann der Anschlag 8 auch elastisch verformbar oder beweglich an der Abstellvorrichtung 7 angeordnet werden.

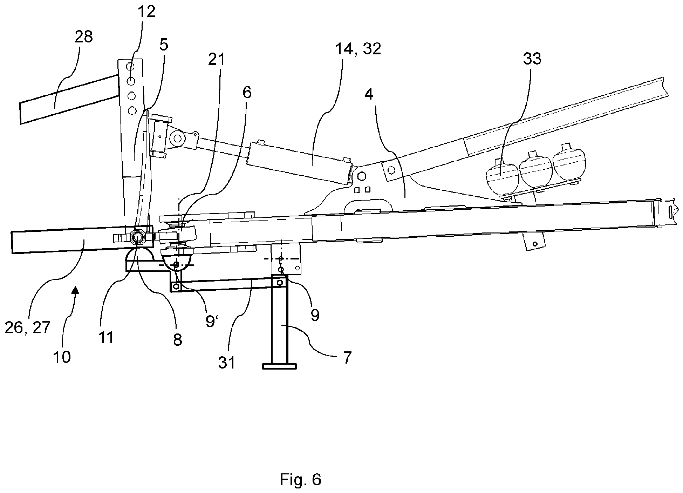

Figur 6 zeigt eine alternative Ausführungsform der zuvor beschriebenen Anordnung der Koppeleinrichtung 5 und der Abstellvorrichtung 7 an der Zugeinrichtung 4. Auch hier ist die Koppeleinrichtung 5 mittels einer als Kugelgelenkauge ausgebildeten Lagerung 6 in allen Freiheitsgraden rotatorisch an der Zugeinrichtung 4 gelagert. Die Abstellvorrichtung 7 und der Anschlag 6 sind getrennt und beabstandet zueinander an der Zugeinrichtung 4 angeordnet. Ein gemeinsames Verschwenken des Anschlages 8 und der Abstellvorrichtung 7 um eine jeweilige Achse 9, 9' wird durch die hier als Strebe 31 gewählte Wirkverbindung erreicht. Alternativ sind weitere Wirkverbindungen denkbar, beispielsweise ein Torsionsstab in Verbindung mit einer seitlich zur Zugeinrichtung verschwenkbaren Abstellvorrichtung 7.

Der Anschlag 8 weist im vorliegenden Beispiel eine verformbare Elastomerauflage auf, auf welcher die Koppeleinrichtung 5 aufliegt. Dies dient zur Überlastsicherung gegen Zerstörung des Anschlages 8, der Strebe 31 und / oder der Abstellvorrichtung 7, wie bereits weiter oben beschrieben. Alternativ sind Stab-, Druck- oder Blattfedern denkbar, welche einen verformbaren Teil des Anschlages oder der Strebe bilden oder diese ersetzen.

Oberhalb ist zwischen der Koppeleinrichtung 5 und der Zugeinrichtung 4 ein als Fluidzylinder ausgebildeter Aktor 32 gelenkig und im Abstand zur Lagerung 6 angeordnet. Dieser steht mit einem Druckspeicher 33 in Verbindung und bildet den Energiespeicjher 14. Dieser ermöglicht eine variable Kraftübertragung von der Zugeinrichtung 4 auf die Aufnahmevorrichtung 10 des Zugfahrzeuges, in dem Stütz-, Zug und Druckkräfte über die Gelenkpunkte 11 und 12 auf die Unterlenker 26, 27 sowie die als Oberlenker ausgebildete Strebe 28 auf das nicht dargestellte Zugfahrzeug 2 übertragen werden. Der Energiespeicher kann alternativ auch als mechanische Feder oder als Elastomer-Feder ausgebildet sein.

Es folgt 5 Blatt mit Zeichnungen.

**BEZUGSZEICHENLISTE**

| | |
|---|---|
| 1 | Fahrzeugkombination |
| 2 | Zugfahrzeug |
| 3 | Anhänger |
| 4 | Zugeinrichtung |
| 5 | Koppeleinrichtung |
| 6 | Lagerung |
| 7 | Abstellvorrichtung |
| 8 | Anschlag |
| 9 | Achse |
| 10 | Aufnahmevorrichtung |
| 11 | Gelenkpunkt |
| 12 | Gelenkpunkt |
| 13 | Strebe |
| 14 | Energiespeicher |
| 15 | Fahrwerk |
| 16 | Werkzeug |
| 17 | Tiefenführung |
| 18 | Rahmen |
| 19 | Aktor |
| 20 | Landwirtschaftliches Arbeitsgerät |
| 21 | Achse |
| 22 | Seitenteil |
| 23 | Seitenteil |
| 24 | Aktor |
| 25 | Querverbindung |
| 26 | Unterlenker |
| 27 | Unterlenker |
| 28 | Strebe |
| 29 | Sicherung |
| 30 | Ausnehmung |
| 31 | Strebe |
| 32 | Aktor |
| 33 | Druckspeicher |

## Patentansprüche

1. Anhänger (3), welcher insbesondere als landwirtschaftliches Gerät oder Fahrzeug ausgebildeten ist, welcher eine Zugeinrichtung (4) und eine mittels einer Lagerung (6) beweglich daran gelagerte Koppeleinrichtung (5) aufweist, wobei die Koppeleinrichtung (5) Gelenkpunkte (11,12) zur lösbaren Verbindung mit einer Aufnahmevorrichtung (10) eines Zugfahrzeuges (2) aufweist,
wobei die Zugeinrichtung (4) eine bewegliche Abstellvorrichtung (7) aufweist, welche von einer Abstellposition in eine Fahrposition und umgekehrt eingestellt werden kann,
**dadurch gekennzeichnet,**
**dass** die Abstellvorrichtung (7) zumindest einen Anschlag (8) aufweist, welcher in der Abstellposition die Beweglichkeit der Koppeleinrichtung (5) und/ oder der Lagerung (6) in zumindest einem Freiheitsgrad limitierend ausgebildet ist.

2. Anhänger (3) nach Anspruch 1,
**dadurch gekennzeichnet,**
**dass** die Abstellvorrichtung (7) und der Anschlag (8) um eine gemeinsame Achse (9) schwenkbar mit der Zugeinrichtung (4) verbunden sind.

3. Anhänger (3) nach Anspruch 1,
**dadurch gekennzeichnet,**
**dass** die Abstellvorrichtung (7) und der Anschlag (8) entfernt voneinander und um jeweils verschiedene Achsen (9, 9') schwenkbar mit der Zugeinrichtung (4) verbunden sind.

4. Anhänger nach Anspruch 1, 2 oder 3,
**dadurch gekennzeichnet,**
**dass** die Lagerung (6) der Koppeleinrichtung (5) rotatorisch zumindest um eine Achse (21),
weiter bevorzugt um eine weitere Achse,
weiter bevorzugt um drei rotatorische Freiheitsgrade beweglich an der Zugeinrichtung (4) gelagert ist.

5. Anhänger (3) nach vorstehenden Ansprüchen,
**dadurch gekennzeichnet,**
**dass** der Anschlag (8) der Abstellvorrichtung (7) plastisch oder elastisch verformbar oder beweglich ausgebildet ist.

6. Anhänger (3) nach vorstehenden Ansprüchen,
**dadurch gekennzeichnet,**
**dass** die Abstellvorrichtung (7) einen Aktor und/oder einen Energiespeicher aufweist, welcher die Bewegung der Abstellvorrichtung (7) relativ zur Zugeinrichtung ausführt und/oder unterstützt.

7. Anhänger (3) nach vorstehenden Ansprüchen,
**dadurch gekennzeichnet,**
**dass** der Koppeleinrichtung (5) die Aufnahmevorrichtung (10) des Zugfahrzeuges (2) als eine höhenbewegliche Hubeinrichtung zugeordnet ist.

8. Anhänger (3) nach vorstehenden Ansprüchen,
**dadurch gekennzeichnet,**
**dass** die Koppeleinrichtung (5) eine Querverbindung (9) aufweist, welche mit einem ersten und einem zweiten Gelenkpunkt (11, 11') mit der Aufnahmevorrichtung (10) des Zugfahrzeuges (2) verbunden ist.

9. Anhänger (3) nach vorstehenden Ansprüchen,
**dadurch gekennzeichnet,**
**dass** die Koppeleinrichtung (5) einen weiteren Gelenkpunkt (12) aufweist, welcher über eine bewegliche Strebe (13) mit dem Zugfahrzeug (2) verbunden ist.

10. Anhänger (3) nach vorstehenden Ansprüchen,
**dadurch gekennzeichnet,**
**dass** an der Koppeleinrichtung (5) ein Energiespeicher (14) angeordnet ist, welcher gelenkig mit der Zugeinrichtung (4) oder dem Zugfahrzeug (2) verbunden ist.
